(19) Europäisches Patentamt
European Patent Office
Office européen des brevets

(11) Veröffentlichungsnummer: **0 056 870**
**B1**

(12) **EUROPÄISCHE PATENTSCHRIFT**

(45) Veröffentlichungstag der Patentschrift: **28.12.83**

(51) Int. Cl.³: **C 09 B 5/62**, C 08 K 5/00, C 09 D 17/00

(21) Anmeldenummer: **81110729.1**

(22) Anmeldetag: **23.12.81**

(54) **Neues Perylen-3,4,9,10-tetracarbonsäurediimid und dessen Verwendung.**

(30) Priorität: **22.01.81 DE 3101885**

(43) Veröffentlichungstag der Anmeldung: **04.08.82 Patentblatt 82/31**

(45) Bekanntmachung des Hinweises auf die Patenterteilung: **28.12.83 Patentblatt 83/52**

(84) Benannte Vertragsstaaten: **CH DE FR GB IT LI**

(56) Entgegenhaltungen:
**DE-B- 2 451 781**
**DE-B- 2 451 783**
**FR-A- 2 111 823**
**US-A- 2 473 015**

(73) Patentinhaber: **BASF Aktiengesellschaft**
**Carl-Bosch-Strasse 38**
**D-6700 Ludwigshafen (DE)**

(72) Erfinder: **Graser, Fritz, Dr.**
**Blieskasteler Strasse 17**
**D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 056 870 B1**

Jouve, 18, rue St-Denis, 75001 Paris, France

Neues Perylen-3,4,9,10-tetracarbonsäurediimid und dessen Verwendung

Die Erfindung betrifft ein neues Perylen-3,4,9,10-tetracarbonsäurediimid und dessen Verwendung. Das neue Perylen-3,4,9,10-tetracarbonsäurediimid hat die Formel

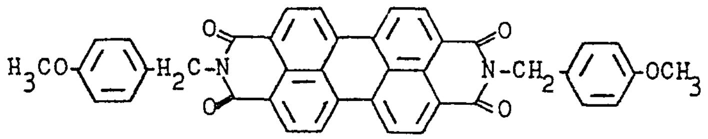

(I)

Das neue Perylentetracarbonsäurediimid (I), im folgenden auch als Diimid bezeichnet, eignet sich hervorragend als Schwarzfarbstoff für Polyäthylen, Polyvinylchlorid, Lacke, Tinten und wäßrige Farbstoffzubereitungen. In transparenten Polyvinylchlorideinfärbungen erhält man Olivtöne. Die Schwarz- bis Olivfärbungen weisen hohe Echtheiten auf. Dies gilt für Medien, die kein oder praktisch kein Lösungsvermögen für das Diimid (I) aufweisen, so daß das Pigment in dem Medium in seiner kristallinen Form, an die die schwarze Farbe gebunden ist, vorliegt. Da die Lösefähigkeit von Kunststoffen mit der Temperatur zunimmt, kommen für die Verwendung von (I) als Schwarzpigment nur solche Medien in Betracht, die bei Temperaturen unterhalb 250 °C eingefärbt und verarbeitet werden und daher das Pigment nicht lösen. Dies ist bei den vorstehend genannten Thermoplasten, Lacken, Tinten und wäßrigen Farbstoffzubereitungen der Fall.

Beim Einarbeiten des Diimids (I) in Polystyrol, Polycarbonat oder Polyacrylaten, wozu in der Regel Verarbeitungstemperaturen von oberhalb 250 °C erforderlich sind, wird das Diimid mit zunehmender Temperatur vom Thermoplast teilweise gelöst und bei genügend hoher Temperatur schließlich vollständig gelöst. Man erhält aus dem schwarzen Pigment über rotstichig schwarze, bzw. im Weißverschnitt rotstichig graue schließlich orange Färbungen, die in transparenter Färbung fluoreszieren und gleichzeitig eine hohe Lichtechtheit aufweisen. In den Orangefärbungen ist (I) molekulardispers gelöst. Diese molekulardisperse Verteilung wird vor allem dann erreicht, wenn die Konzentration an (I) niedriger ist als das Lösungsvermögen des Thermoplasts für (I) bei der Verarbeitungstemperatur.

Das Diimid (I) hat besonderes Interesse als Schwarzfarbstoff für Schwarz- bis Olivfärbungen. Der Farbstoff weist ausgezeichnete Licht- und Wetterechtheiten sowie sehr gute Überlackier- und gute Weichmacherechtheiten auf. Man kann (I) auch mit anderen Farbstoffen mischen, um andere dunkle Farbtöne einzustellen, z. B. Olivtöne für Militärartikel. Durch Mischen mit Weißpigmenten, z. B. Titandioxid kann man Grautöne einstellen. Der neue Farbstoff (I) ist besonders zum Einfärben von Lacken und Polyvinylchlorid interessant.

Der Farbstoff (I) zeigt im IR-Bereich ein ausgezeichnetes Remissionsvermögen und ist deshalb für die Herstellung von Tarnfarben sehr gut geeignet. Die IR-Remission ähnelt der des Chlorophylls, d. h. die Remission ist bei 650 nm nicht größer als bei 550 nm. In Mischung mit Weißpigment, z. B. Titandioxid, zeigt die Färbung die wichtige Absenkung der Remission zwischen 550 und 700 nm und ab 700 nm den erwünschten steilen Anstieg der Remission. In diesen Eigenschaften ist das Diimid (I) den aus den DE-C 24 51 780, 24 51 781 und 24 51 783 bekannten Schwarzpigmenten deutlich überlegen.

Der Befund, daß das Diimid (I) ein schwarzes Pigment ist, war nicht vorherzusehen, da man aufgrund der Angaben in der CH-A 372 163 und der DE-C 11 30 099 erwarten mußte, daß auch das Di-4-Methoxybenzylimid der Perylen-3,4,9,10-tetracarbonsäure wie die Di-methyl-, Di-ethyl-imide ein Rotpigment sein würde.

Da die schwarze Farbe des Pigmentteilchens durch den Aufbau des Kristallgitters bestimmt wird und dieser aus der Molekülstruktur nicht abgeleitet und damit nicht vorhergesagt werden kann (vgl. F. Graser und E. Hädicke, Liebigs Annalen der Chemie *1980*, S. 1994 ff), war auch bei Kenntnis der DE-C 24 51 783, 24 51 780 und 24 51 781 nicht vorherzusehen, daß das Diimid (I) ein schwarzes Pigment sein würde.

Das Diimid (I) wird in an sich bekannter Weise durch Umsetzen von Perylen-3,4,9,10-tetracarbonsäure oder deren Dianhydrid mit 4-Methoxy-benzylamin in Wasser oder einem organischen Lösungsmittel bei erhöhter Temperatur, gegebenenfalls unter Druck hergestellt.

Das bei der Synthese erhaltene rohe Diimid (Rohfarbstoff) kann in dieser Form verwendet werden. Der Rohfarbstoff kann aber auch durch zusätzliche Maßnahmen, z. B. durch Überführung in eine feinverteilte Form durch Umfällen aus Schwefelsäure oder durch Mahlen und gegebenenfalls durch anschließendes Rekristallisieren in Wasser und/oder organischen Lösungsmitteln bei höherer Temperatur in an sich bekannter Weise in besondere Finishformen überführt werden.

Die folgenden Beispiele sollen die Erfindung weiter erläutern. Die im folgenden genannten Teile und Prozentangaben beziehen sich auf das Gewicht.

## Beispiel 1

In 1 200 Teilen Äthylenglykol werden 110 Teile Perylentetracarbonsäuredianhydrid und 100 Teile 4-Methoxybenzylamin unter Rühren auf 170 bis 175 °C erhitzt und solange bei dieser Temperatur gehalten,

bis keine Perylentetracarbonsäure mehr nachzuweisen ist. Dies ist nach etwa 1 Stunde der Fall. Man läßt auf etwa 80 °C abkühlen, verdünnt mit 650 Teilen Methanol und filtriert bei etwa 40 °C. Den Filterrückstand wäscht man mit 300 Teilen Methanol, dann mit Wasser und trocknet. Ausbeute : 174 Teile des Perylentetracarbonsäure-bis-(4-methoxybenzylimids) als olivschwarzes Pulver. Unter dem Mikroskop sind kleine olivgrünen Kristallnadeln zu erkennen.

Analyse : $C_{40}H_{26}N_2O_6$ (630,6)
ber. 76,2 % C 4,1 % H 15,2 % O 4,4 % N
gef. 75,8 % C 4,2 % H 15,6 % O 4,4 % N

Für die Anwendung als Pigment wird das rohe Syntheseprodukt in einer schnellaufenden Rührwerksmühle nach DE-B 28 32 761, Beispiel 1, fein gemahlen.

Beispiel 2

In 1 000 Teile Wasser werden 78,4 Teile Perylentetracarbonsäuredianhydrid und 57,6 Teile 4-Methoxybenzylamin gerührt und in einem druckdicht verschlossenen Reaktionsgefäß auf 130 bis 135 °C erhitzt. Man rührt etwa 5 Stunden bei dieser Temperatur, dann zeigt eine Probe keine freie Perylentetracarbonsäure mehr an. Nach dem Abkühlen und Entspannen wird die Reaktionsmischung mit heißem Wasser verdünnt, mit 10 %iger wäßriger Schwefelsäure auf einen pH von 4 gestellt, filtriert, das Filtergut mit heißen Wasser neutral gewaschen und bei 80 °C im Vakuum getrocknet. Ausbeute : 125 Teile Perylentetracarbonsäure-bis-(4-methoxybenzylimid) als olivschwarzes Pulver. Unter dem Mikroskop sind winzige olivgrüne Kristalle zu erkennen. Der Farbstoff kann bereits in dieser Rohform zum Färben verwendet werden.

Analyse : $C_{40}H_{26}N_2O_6$ (630,6)
ber. 76,2 % C 4,1 % H 15,2 % O 4,4 % N
gef. 75,7 % C 4,1 % H 15,5 % O 4,5 % N

Beispiel 3

10 %ige Volltoneinbrennlackierung

a) Volltonpaste (30 %ig)
3 Teile fein gemahlener Farbstoff des Beispiels 1, Absatz 2, werden mit 7 Teilen eines firnisähnlichen Bindemittels (= Grinding Base 100 S der Fa. Lawter Chemicals Inc., Chicago) auf einem Dreiwalzenstuhl mit 6 Passagen bei 80 bar zu einer 30 %igen Volltonpaste verarbeitet.

b) Volltonlackpaste (10 %ig)
2 Teile Volltonpaste a) werden mit 4 Teilen eines Bindemittelgemisches, bestehend aus 1 Teil eines mit Sojaöl midifizierten Alkydharzes, 2 Teilen eines mit synthetischer Fettsäure modifizierten Alkydharzes und 3 Teilen eines lösungsmittelfreien Melaminharzes vermischt.

c) Durchführung der Färbung
Mit einem Filmziehgerät wird die Volltonlackpaste b) auf weißen Karton in einer Schichtdicke von 100 µm aufgetragen und 45 Minuten bei 120°C eingebrannt. Man erhält eine schwarze Färbung mit ausgezeichneter Licht- und Wetterechtheit.

Die Färbung zeigt zwischen 400 und 1 200 nm die folgenden Remissionswerte, bis 700 nm gemessen mit einem Spektralphotometer Zeiss RFC 16 gegen Absolut-Weiß als Standard und von 700 bis 1 200 nm mit einem Zeiss PMQ 2 gegen Bariumsulfat :

| λ [nm] | 400 | 420 | 440 | 460 | 480 | 500 | 520 |
|---|---|---|---|---|---|---|---|
| Remission [%] | 5,34 | 5,28 | 5,24 | 5,20 | 5,19 | 5,16 | 5,14 |

| λ [nm] | 540 | 560 | 580 | 600 | 620 | 640 | 660 |
|---|---|---|---|---|---|---|---|
| Remission [%] | 5,13 | 5,10 | 5,05 | 5,03 | 5,04 | 5,07 | 5,15 |

| λ [nm] | 680 | 700 | 750 | 800 | 850 | 900 | 950 |
|---|---|---|---|---|---|---|---|
| Remission [%] | 5,31 | 5,85 | 22,6 | 58,5 | 66,8 | 70,8 | 73,0 |

| λ [nm] | 1000 | 1050 | 1100 | 1150 | 1200 |
|---|---|---|---|---|---|
| Remission [%] | 74,6 | 76,2 | 77,5 | 77,0 | 74,8 |

Auf der Abbildung 1 (Anlage) ist die Remission in %, bezogen auf « Absolut-Weiß » bzw. auf « Bariumsulfat », in Abhängigkeit von der Wellenlänge für die Volltonfärbung (Kurve 1) dargestellt.

Ganz ähnliche Färbungen und IR-Remissionswerte erhält man, wenn man statt des fein gemahlenen Farbstoffs des Beispiels 1 den nach Beispiel 2 erhaltenen Farbstoff verwendet.

## Beispiel 4

Einbrennlackierung (Weißverschnitt 1 : 4)

a) Weißpaste (30 %ig)

42 Teile eines Bindemittels, erhalten durch Vermischen von 1 Teil eines mit Sojaöl modifizierten Alkydharzes und 2 Teilen eines mit synthetischer Fettsäure modifizierten Alkydharzes werden mit 30 Teilen Titandioxid (Rutilware), 22 Teilen eines lösungsmittelfreien Melaminharzes und 6 Teilen eines kolloidalen Siliziumdioxids auf dem Dreiwalzenstuhl bei 80 bar mit 6 Passagen zu einer 30 %igen Weißspaste angerieben.

b) Lackpaste

2,5 Teile Volltonpaste (30 %ig) des Beispiels 3a) und 10 Teile der Weißpaste (30 %ig) a) werden auf einem Telleranreibegerät gemischt und verrieben.

c) Durchführung der Färbung

Mit einem Filmziehgerät wird die Lackspaste b) auf Karton mit einer Schichtdicke von 100 µm aufgetragen und 45 Minuten bei 120 °C eingebrannt. Es werden grünstichige Graufärbungen mit ausgezeichneter Licht- und Wetterechtheit erhalten.

Die Remission der Färbung wurde wie in Beispiel 3 angegeben bestimmt :

| λ [nm] | 400 | 420 | 440 | 460 | 480 | 500 | 520 |
|---|---|---|---|---|---|---|---|
| Remission [%] | 15,56 | 15,25 | 14,45 | 14,28 | 14,45 | 14,85 | 15,12 |

| λ [nm] | 540 | 560 | 580 | 600 | 620 | 640 | 660 |
|---|---|---|---|---|---|---|---|
| Remission [%] | 15,10 | 14,75 | 13,78 | 12,35 | 11,01 | 9,80 | 8,83 |

| λ [nm] | 680 | 700 | 750 | 800 | 850 | 900 | 950 |
|---|---|---|---|---|---|---|---|
| Remission [%] | 8,76 | 11,04 | 52,7 | 77,6 | 80,7 | 82,0 | 82,6 |

| λ [nm] | 1000 | 1050 | 1100 | 1150 | 1200 |
|---|---|---|---|---|---|
| Remission [%] | 82,8 | 83,2 | 83,6 | 83,1 | 81,4 |

Die Remissionskurve ist auf der Abbildung, Kurve 2, wiedergegeben.

## Beispiel 5

0,1 Teil fein gemahlener Farbstoff, erhalten nach Beispiel 1, Absatz 2, werden mit 100 Teilen Polyvinylchloridpulver (Emulsionsware) und 2 Teilen Dibutyl-Zinn-bis-thioglykolsäurehexylester auf einem Mischwalzwerk bei 150 bis 160 °C homogenisiert (Dauer : ca. 8 Minuten). Die erhaltenen Walzfelle werden auf einer Plattenpresse bei 140 °C mit ca. 0,4 kg/cm$^2$ zu Platten gepreßt. Man erhält olivfarbene Preßlinge mit vorzüglicher Lichtechtheit.

Das gleiche Ergebnis erhält man mit Polyvinylchlorid, das durch Suspensionspolymerisation hergestellt worden ist.

## Beispiel 6

0,25 Teil fein gemahlener Farbstoff, erhalten nach Beispiel 1, Absatz 2, werden mit 2,5 Teilen Titandioxid (Rutilware) und 50 Teilen einer Mischung aus 65 Teilen Polyvinylchloridpulver, 35 Teilen Diäthylhexylphthalat und 2 Teilen Dibutyl-Zinn-bis-thiolglykolsäurehexylester auf einem Mischwalzwerk bei 150 bis 160 °C homogenisiert (ca. 8 Minuten), zu Fellen gewalzt und auf einem Kalanderwalzwerk geglättet. Man erhält grau gefärbte Felle mit ausgezeichneter Lichtechtheit und guter Weichmacherechtheit.

Verwendet man statt 0,25 Teil Farbstoff 0,5 Teil und statt 2,5 Teilen Titandioxid 0,25 Teil, so erhält man schwarze Felle mit ausgezeichneter Lichtechtheit und guter Weichmacherechtheit.

Beispiel 7

0,1 Teil fein gemahlener Farbstoff, erhalten nach Beispiel 1, Absatz 2, werden mit 50 Teilen einer Mischung aus 65 Teilen Polyvinylchloridpulver, 35 Teilen Di-äthylhexylphthalat und 2 Teilen Dibutyl-Zinn-bis-thiolglykolsäurehexylester auf einem Mischwalzwerk bei 150 bis 160 °C homogenisiert (Dauer : ca. 8 Minuten), zu Fellen gewalzt und auf einem Kalanderwalzwerk geglättet. Man erhält olivschwarze Felle mit ausgezeichneter Lichtechtheit.

Ganz ähnliche Färbungen erhält man, wenn man statt des fein gemahlenen Farbstoffs des Beispiels 1 den nach Beispiel 2 erhaltenen Farbstoff verwendet.

Beispiel 8

0,1 Teil fein gemahlener Farbstoff, erhalten nach Beispiel 1, Absatz 2, werden in einem Trommelmischer mit 100 Teilen Polyäthylenpulver (Hochdruckware) und 1 Teil Titandioxid (Rutilware) trocken gemischt. Das Gemisch wird auf einer Schneckenpresse bei einer Zylindertemperatur von 160 bis 200 °C geschmolzen und homogenisiert. Die gefärbte plastische Masse wird durch Heißabschlagen am Düsenkopf oder durch Ausziehen von Fäden unter Kühlung granuliert. Das so erhaltene Granulat wird anschließend in einer Spritzgußvorrichtung bei 200 °C zu Formkörpern verspritzt oder auf Pressen zu beliebigen Körpern gepreßt. Man erhält graue Preßlinge mit ausgezeichneter Lichtechtheit.

Beispiel 9

0,1 Teil Farbstoff, erhalten nach Beispiel 2, werden mit 100 Teilen Polyvinylchloridpulver (Suspensionsware), 1 Teil Titandioxid (Rutilware) und 2 Teilen Dibutyl-Zinn-bis-dithioglykolsäurehexylester auf einem Mischwalzwerk wie in Beispiel 5 beschrieben homogenisiert und anschließend zu Platten gepreßt. Man erhält graue Preßlinge mit vorzüglicher Lichtechtheit.

Beispiel 10

0,05 Teil Farbstoff, erhalten nach Beispiel 2, werden in einem Trommelmischer mit 100 Teilen Polyäthylenpulver (Hochdruckware) trocken gemischt. Das Gemisch wird auf einer Schneckenpresse bei einer Zylindertemperatur von 160 bis 200 °C geschmolzen und homogenisiert. Die gefärbte plastische Masse wird durch Heißabschlagen am Düsenkopf oder durch Ausziehen von Fäden unter Kühlung granuliert. Das so erhaltene Granulat wird anschließend in einer Spritzgußvorrichtung bei 200 °C zu Formkörpern verspritzt oder auf Pressen zu beliebigen Körpern gepreßt. Man erhält schwarzgraue Preßlinge mit ausgezeichneter Lichtechtheit.

**Ansprüche**

1. Perylen-3,4,9,10-tetracarbonsäurediimid der Formel

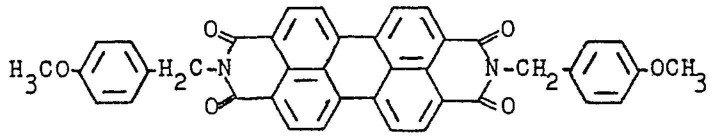

(I)

2. Verwendung des Diimids gemäß Anspruch 1 als Schwarzfarbstoff.

**Claims**

1. A perylene-3,4,9,10-tetracarboxylic diimide of the formula

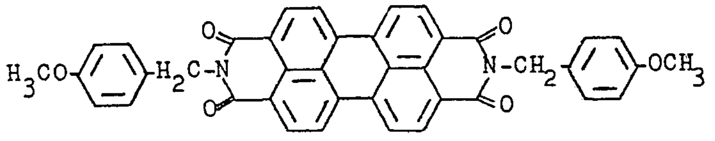

(I)

2. The use of a diimide as claimed in claim 1 as a black dye.

**Revendications**

1. Diimide d'acide pérylène-3,4,9,10-tétracarboxylique de formule

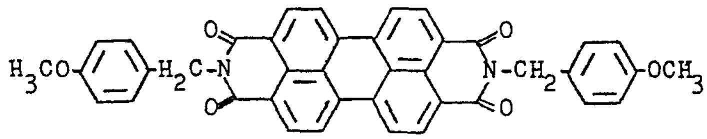

(I)

2. Utilisation du diimide selon la revendication 1 comme colorant noir.

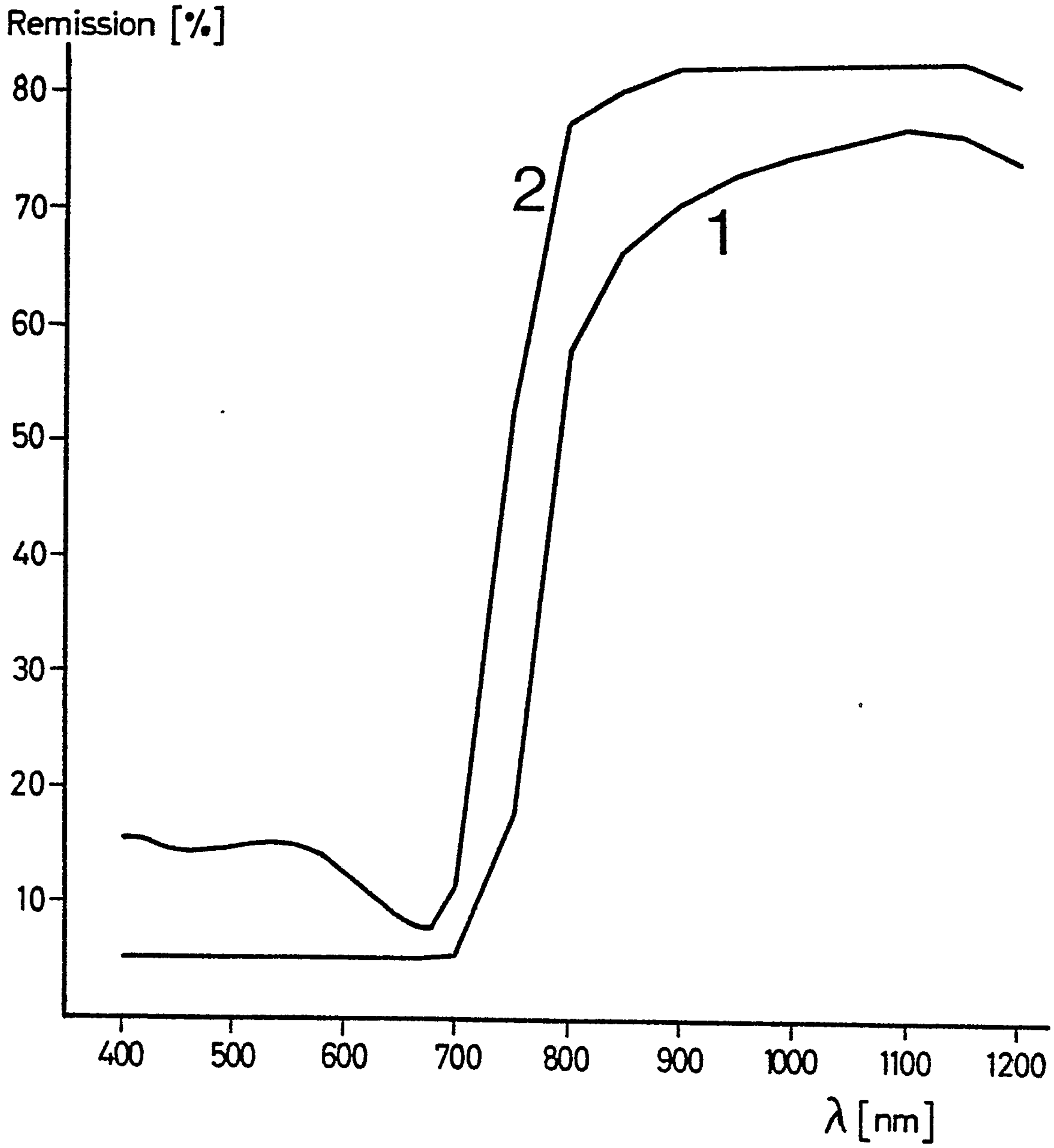
Remission [%]
80
70
60
50
40
30
20
10
2
1
400
500
600
700
800
900
1000
1100
1200
λ [nm]